Europäisches Patentamt

European Patent Office

Office européen des brevets

(11) Publication number: **0 136 777**
**B1**

(12) **EUROPEAN PATENT SPECIFICATION**

(45) Date of publication of patent specification: **15.11.89**

(51) Int. Cl.⁴: **G 11 B 25/04**

(21) Application number: **84304718.4**

(22) Date of filing: **11.07.84**

(54) Linear motor.

(30) Priority: **12.07.83 US 512875**

(43) Date of publication of application:
**10.04.85 Bulletin 85/15**

(45) Publication of the grant of the patent:
**15.11.89 Bulletin 89/46**

(84) Designated Contracting States:
**BE DE FR GB IT NL**

(56) References cited:
**US-A-3 896 319**
**US-A-4 001 889**
**US-A-4 306 922**

**IBM TECHNICAL DISCLOSURE BULLETIN, vol. 23, no. 1, June 1980 D.R. JOHNSON et al. "Tapered magnet voice coile motor" pages 315-316**

(73) Proprietor: **UNISYS CORPORATION**
**1, Burroughs Place**
**Detroit Michigan 48232 (US)**

(72) Inventor: **Morris, Frank Ivan**
**5816 South View Drive**
**San Jose California 95138 (US)**

(74) Representative: **Kirby, Harold Douglas Benson et al**
**G.F. Redfern & Company Marlborough Lodge 14 Farncombe Road**
**Worthing West Sussex BN11 2BT (GB)**

EP 0 136 777 B1

## Description

This invention relates to disc drive arrangements including head actuator apparatus and related linear motors and to methods of fabricating magnetic-flux carrying parts of such motors.

Background, problems

The present invention concerns magnetic disc drive (DD) assemblies and particularly the structure of voice coil motors for DD actuators.

Workers in the art of making and using magnetic disc drives for storage of digital data for computer and other applications are attuned to today's thrust to make these more cost-effective. The present invention relates to improvements in the actuator mechanism and, more particularly, in the voice coil motor portion thereof in order to enhance actuator efficiency and access time.

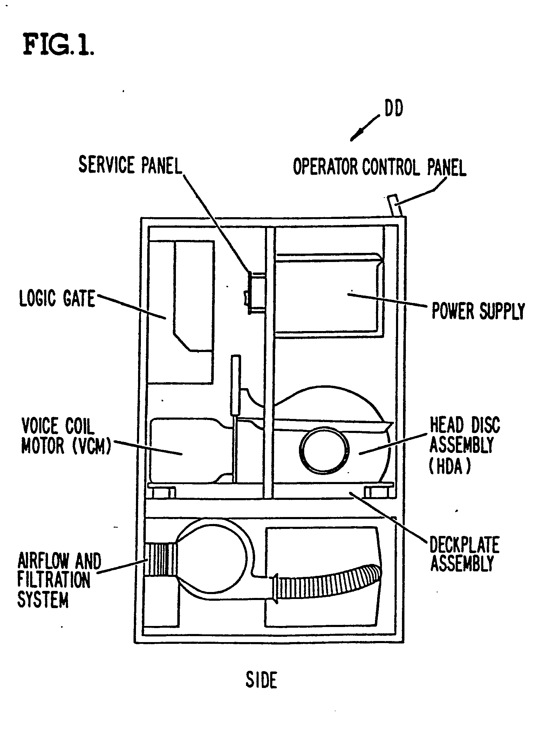

Context of invention, disc drive, VC motor, Figs. 1—3

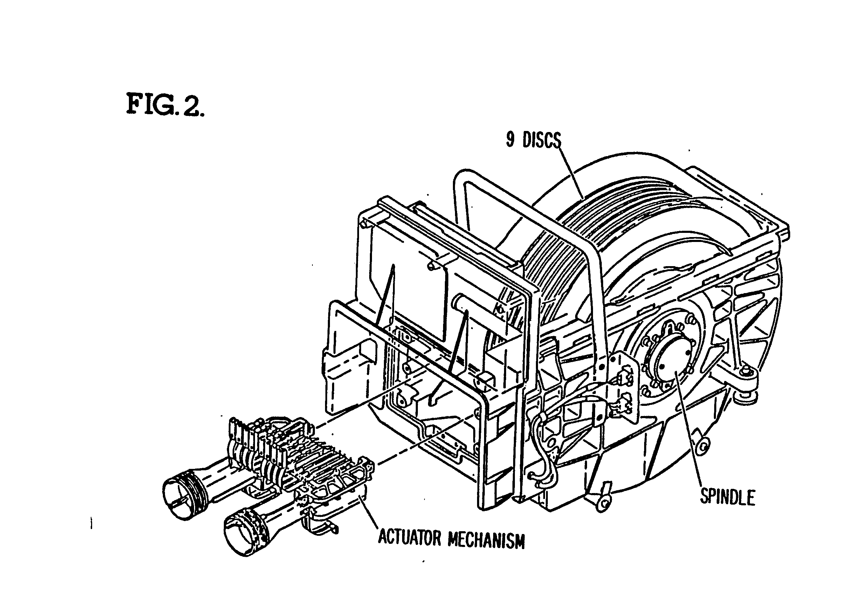

Fig. 1 shows a very schematic side-view of a disc drive (DD) module of improved construction. Of particular interest here is the head-disc assembly (HDA) shown in more detail in Fig. 2, with the (dual) actuators therefor being driven by an associated voice coil motor (VCM) as workers in the art will understand. Both the HDA and VCM are mounted as part of a "deck plate" assembly as schematically indicated. The deck plate assembly will be understood as comprising a deck plate mounting the dual-voice coil motor (VCM), the drive-blower motor, the drive belt and its cover, and the HDA mounting hardware.

This HDA is characterized by a dual-actuator mechanism, including a pair of actuators each capable of covering one-half of the HDA storage area and being adapted, as workers will understand, to position and move a set (preferably 16) of read/write transducers across prescribed respective disc surfaces.

The dual-actuator assembly comprises two carriages, each carrying four head arm assemblies. Each head arm assembly carries four read/write heads. The carriage is fitted with a voice coil whcih moves in the magnetic air gap of the VCM. Note that, preferably, each actuator here carries 16 thin-film heads, one for servo use and the other 15 for read/write functions. The actuators are separately addressable and also include a portion of the HDA electronics.

Preferably this is a Winchester type HDA consisting of nine 14" magnetic discs installed on a common horizontl spindle with two actuators. The spindle will be rotated in a known fashion (e.g., at a nominal 3600 rpm, as controlled by a drive-blower motor), allowing the heads to fly slightly above disc surfaces when the discs are rotating, and also insuring that the HDA is free of contaminating particles. This drive-blower motor (mounted on the deck plate as indicated) is an integral part of both the HDA and the air flow-filtration system. The HDA should be sealed and include a set of crash stop assemblies for each actuator.

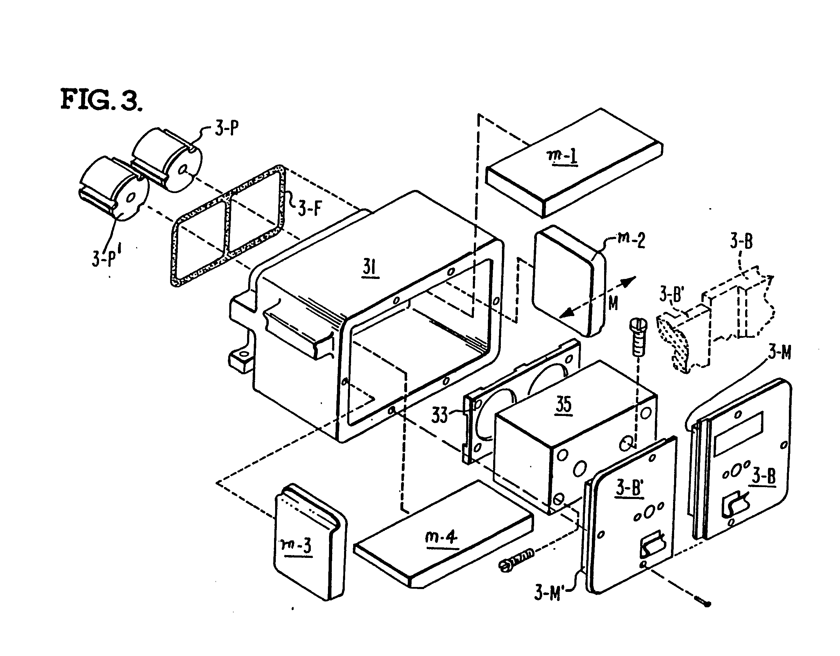

The VCM itself (see Fig. 3) is—according to my invention—made up of a "ductile iron" housing (31), an aluminum flux collector spacer (33), a "ductile iron" flux collector (35), two pole pieces (3-P and 3-p') of "1018" rolled steel, a top and bottom magnet (m-1, m-4), two side magnets (m-2, m-3), and two "back magnets" (3-M, 3-M'), each bonded to a respective back plate (3-B, 3-B').

The magnets are magnetized in a direction (indicated in Fig. 3) to concentrate the flux in the flux collector 35 and drive it through the air gap via the pole pieces. The magnet area and thickness are designed to ensure that the pole pieces are "saturated" (i.e., the average magnetic induction in the pole pieces is greater than 1,8 T). This ensures that there is little or no change in the flux density in the gap due to the demagnetizing effects of operating temperature variation and/or high voice coil currents.

Problems with conventional VCM housing

It is somewhat conventional to fabricate housing parts for motors like this VCM structure (cf. housing of 31 and collector 35 in Fig. 3) of "cast steel" (typically, cast steel will comprise iron plus a certain concentration of carbon, with various trace constituents like manganese). One problem with cast steel parts is that they are particularly hard to machine and rather expensive to fabricate; also, they have relatively "poor" (non-optimum) magnetic properties; viz. relatively high magnetic induction at low magnetizing fields.

Proposed solution

Accordingly, I contemplated replacing cast steel with a "ductile ferrite" for such a housing. However, it appeared that "ordinary" ductile ferrite is apt to have questionable magnetic properties (e.g., see Gray and Ductile Iron Castings Handbook, by Iron Founders Society). I discovered that this is likely due to the varying high, and uncontrolled, concentrations of certain common impurities therein, such as carbon, silicon, and manganese. That is, it first seemed unattractive to use "ductile ferrite" at all for such a housing because it is likely to be unstable (e.g., varying percentage of "magnet-impurities", like carbon, silicon, and/or manganese and because its magnetic properties will be seen to vary widely in the ordinary case).

To my surprise, I further discovered that when the concentrations of such "magnet impurities" were reduced and kept controlled relatively closely (see Table II below), such problems seem to ameliorate and one could provide an improved VCM housing. (Assuming that these materials were controlled throughout

2

the manufacture and processing, including the annealing, of the housing and flux collector casting). This is exemplified in a structure described below in Ex. 1.

Brief description of the drawings

These and other features and advantages of the present invention will be appreciated by workers as they become better understood by reference to the following detailed description of the present preferred embodiments which should be considered in conjunction with the accompanying drawings, wherein like reference symbols denote like elements:

Fig. 1 is a very schematic side view of an exemplary disc drive arrangement of the type contemplated; while

Fig. 2 is an enlarged side view of an associated disc file with dual-actuator mechanism; and

Fig. 3 is an enlarged, exploded view of a contemplated voice coil motor assembly for such an actuator.

Description of the preferred embodiments

General description, background

Example I concerns a VCM actuator constructed according to principles of this invention. This, and other such structures discussed herein, will generally be understood as constructed and operating as presently known in the art, except where otherwise specified. And, except as otherwise specified, all materials, methods and devices and apparatus herein will be understood as implemented by known expedients according to present good practice.

Example I

Along the lines of the foregoing, I happened to construct VCM parts (see collector 35 and housing 31 of Fig. 3) by modifying "ordinary ductile ferrite" to comprise a "magnetic ductile ferrite" (mdf) of "controlled-composition". Concentration of mdf constituents was carefully maintained through annealing, etc., as required to obtain magnetic properties listed in Table I. This mdf will be understood to comprise a high concentration of relatively pure iron ("ingot iron" having optimum magnetic properties, of course, but being unduly expensive and not readily cast—preferably 95 wt.% or more of the total iron present will be in the highly magnetic free, uncombined form and not the combined from such as $Fe_3C_4$ or Pearlite), plus maximum concentrations of about: 3.75 wt.% carbon, about 2.8 wt.% silicon, and about 0.5 wt.% manganese (i.e., of "magnetic impurities"). Preferably the carbon content is not greater than 3.6 wt.%, the silicon content is not greater than 2.3 wt.% and the manganese content is 0.3 wt.%.

After casing a housing piece and collector from this "magnetic ductile ferrite", I made it a point during further processing of the pieces to keep these constituent concentrations closely controlled at all times. For instance, during heat-treating and annealing, I specified that these processes should be controlled to maximize the "free ferrite" content (when annealed correctly, the "free ferrite"—the non-combined part—would be a minimum of 95% of the total Fe). Workers are familiar with standard annealing, or "ferritizing", steps for such stock, with such purposes and characteristics in mind (that is: known time, temperature of heating and cooling steps according to carbon content, etc.—Workers in the art will understand that this may be performed according to known methods such as those suggested in the cited Handbook). I prefer "slow cooling" as noted below.

More particularly, since the coercive force (MMF) required to drive the magnetic flux around the magnetic return path (viz. the VCM housing-collector lie in this path) is approximately 4000 A/m, it is important that the corresponding magnetic induction (B) should be as high as possible in this range.

Table I gives a comparison of the magnetic induction B associated with cast steel, ordinary ductile iron (odf) and magnetic ductile iron (mdf) at several relevant values of coercive force.

TABLE I

| Magnetizing force (H A/m) | Mag. induction (nom. B, in T) for: | | |
|---|---|---|---|
| | —cast steel | (mdf) —mag. duct. iron | (odf) —ord. duct. iron |
| 2000 | 1,35 | 1,42 | -0,91 |
| 4000 | 1,43 | 1,48 | 1,10 |
| 8000 | 1,51 | 1,56 | 1,32 |

Thus, for instance, at H=4000 A/m, an "ordinary ductile ferrite" (odf) presents a flux density of about 1,10 T, whereas my "magnetic" version (mdf) presents about 1,48 (and cast steel about 1,43).

I have further discovered that best results are achieved by restricting the "magnetic" ductile ferrite (mdf) composition to comprise "magnetic ferrite" (95+% in "free" state, after heat treating), with the stated "magnetic impurities" kept in the ranges indicated in Table II below.

3

TABLE II

|  | Preferred | Typical range |
|---|---|---|
| C+ | 3.55 | 3.2—3.75 wt.% |
| Si | 2.33 | 2.1—2.8 wt.% |
| $M_n$ | 0.3 | 0.28—0.52 wt.% |
| Total | 6.18 | |

One might incidentally observe that, while manganese may be derived from low cost "remelt" stock, such stock is apt to introduce varying levels of such magnetic impurities and it may not be worth the trouble to properly "reclaim" it.

Magnetic ductile iron (mdf) will be understood as useful for other like "low mmf" flux-carrier structures, like this VCM housing, but not for structures like the pole pieces which are designed to operate at magnetic saturation and, thus, need "high" MMF to drive the associated flux. Note that the alloys per se are not necessarily novel; rather, it is new and unexpected that the specified (mdf) alloys are so readily fabricated into such stable, consistent parts having such apt, advantageous, consistent metallurgic and magnetic characteristics for such motor parts and the like (cf. surprisingly good flux carriers at low fields, under small magnetizing forces).

Example II (Table III)

Ex. I is modified so that the "magnetic" ductile iron comprises a slightly higher percentage of "magnet impurity" as in Table III below.

TABLE III

| Carbon | (C) | 3.22% |
|---|---|---|
| Magnesium | (Mg) | 0.40 |
| Manganese | (Mn) | 0.73 |
| Phosphorus | (P) | 0.022 |
| Silicon | (Si) | 2.42 |
| Sulfur | (S) | 0.032 |
| Tin | (Sn) | Less than 0.01% |
| | | 6.5+% |

It is evident that much "magnet impurity" is present here (e.g., 6.5+ wt.% in Total—also, more than 0.3% Mn and more than 2.33% Si)—not to mention the "combined iron" (e.g., Fe-C compound like Pearlite) that is also usually present—whereas 95+wt.% "free iron" (minimum) is preferred (e.g., workers realize that annealing and like known heat treating steps can be used to reduce the concentration of "Pearlite" and other "combined iron").

Example III (Table IV)

Ex. I is further modified to include more Carbon and Silicon and a particularly high concentration of Mn as indicated in Table IV below.

TABLE IV

| Carbon | 3.70 |
|---|---|
| Silicon | 2.77 |
| Manganese | 0.52 |
| Tin | 0.012 |
| Chromium | 0.072 |
| Nickel | 0.062 |
| Magnesium | 0.051 |
| Aluminum | 0.02 |
| Copper | 0.084 |

This example also gave satisfactory results; surprisingly. For instance, the rather high concentration of iron-affinitive impurities like manganese do not prevent one from achieving a high proportion of "ingot iron" and relative magnetic enhancement. For instance, slow, careful ferretizing (relatively slow cooling after anneal) will allow up to 98% pure iron to be derived. (In effecting such cooling, one may avoid tying-up the anneal-furnace by cooling in a separate insulated, unheated chamber).

4

# EP 0 136 777 B1

Conclusion

It will be understood that the preferred embodiments described herein are only exemplary, and that the invention is capable of many modifications and variations in construction, arrangement and use without departing from the spirit of the invention. For example, the means and methods disclosed herein are also applicable to other related magnetic motor actuator systems and the like. Also, the present invention is applicable for providing the positioning required in other forms of recording and/or reproducing systems, such as those in which data is recorded and reproduced optically.

**Claims**

1. A disc drive arrangement including head actuator apparatus and a related linear actuator motor, characterised in that the motor includes a housing (31) and a flux collector (35) both of which consist of ductile ferrite in which the carbon content is not greater than 3.75 wt.%; the silicon content is not greater than 2.8 wt.% and the manganese content is not greater than 0.52 wt.%.

2. An arrangement according to Claim 1, characterised in that the impurity concentrations are in the ranges:— carbon 3.2—3.75 wt.%; silicon 2.1—2.8 wt.%; and manganese 0.28—0.52 wt.%.

3. An arrangement according to Claim 1, characterised in that the impurity concentrations are carbon 3.55 wt.%; silicon 2.33 wt.%; and manganese 0.3 wt.%.

4. An arrangement according to Claim 1, characterised in that the carbon content is not greater than 3.6 wt.%, the silicon content is not greater than 2.3 wt.%, and the manganese content is 0.3 wt.%.

5. An arrangement according to any of the preceding claims, characterised in that 95 wt.% or more of the iron present is in the highly magnetic free, uncombined form.

6. A method of fabricating magnetic-flux carrying parts of a linear motor for driving a head actuator in a disc drive arrangement, characterised in that at least the housing (31) and the flux collector (35) of said motor are made of ductile ferrite in which the carbon content is not greater than 3.75 wt.%, the silicon content is not greater than 2.8 wt.% and the manganese content is not greater than 0.52 wt.%.

7. A method according to Claim 6, characterised in that the impurity concentrations are in the ranges:— carbon 3.2—3.75 wt.%; silicon 2.1—2.8 wt.%; and manganese 0.28—0.52 wt.%.

8. A method according to Claim 6, characterised in that the impurity concentrations are carbon 3.55 wt.%; silicon 2.33 wt.%; and manganese 0.3 wt.%.

9. A method according to Claim 6, characterised in that the carbon content is not greater than 3.6 wt.%, the silicon content is not greater than 2.3 wt.%, and the manganese content is 0.3 wt.%.

10. A method according to any of Claims 6 to 9, characterised in that 95 wt.% or more of the iron present is in the highly magnetic free, uncombined form.

**Patentansprüche**

1. Scheibenantriebsanordnung, die ein Kopfbetätigungsgerät und einem damit zusammenhängenden Linearbetätigungsmotor enthält, dadurch gekennzeichnet, daß der Motor ein Gehäuse (31) und einen Flußkollektor (35) enthält, welche beide aus duktilem Ferrit bestehen, in dem der Karbonanteil nicht größer als 3,75 Gew.%, der Siliziumanteil nicht größer als 2,8 Gew.% und der Mangananteil nicht größer als 0,52 Gew.% ist.

2. Anordnung nach Anspruch 1, dadurch gekennzeichnet, daß die Fremdstoffkonzentrationen in den Bereichen liegen: Karbon 3,2—3,75 Gew.%; Silizium 2,1—2,8 Gew.%; und Mangan 0,28—0,52 Gew.%.

3. Anordnung nach Anspruch 1, dadurch gekennzeichnet, daß die Fremdstoffkonzentrationen 3,55 Gew.% Karbon; 2,33 Gew.% Silizium; und 0,3 Gew.% Mangan sind.

4. Anordnung nach Anspruch 1, dadurch gekennzeichnet, daß der Karbonanteil nicht größer als 3,6 Gew.%, der Siliziumanteil nicht größer als 2,3 Gew.% und der Mangananteil 0,3 Gew.% ist.

5. Anordnung nach einem der vorangegangenen Ansprüche, dadurch gekennzeichnet, daß 95 Gew.% oder mehr an Eisen in hoch-magnetischer freier, ungebundener Form vorhanden ist.

6. Verfahren zur Herstellung von Magnetfluß führenden Teilen eines Linearmotors für den Antrieb eines Kopfbetätigungselements in einer Scheibenantriebsanordnung, dadurch gekennzeichnet, daß mindestens das Gehäuse (31) und der Flußkollektor (35) des Motors aus duktilem Ferrit hergestellt werden, in dem der Karbonanteil nicht größer als 3,75 Gew.%, der Siliziumanteil nicht größer als 2,8 Gew.% und der Mangananteil nicht größer als 0,52 Gew.%.

7. Verfahren nach Anspruch 6, dadurch gekennzeichnet, daß die Fremdstoffkonzentrationen in den Bereichen liegen: Karbon 3,2—3,75 Gew.%; Silizium 2,1—2,8 Gew.%; und Mangan 0,28—0,52 Gew.%.

8. Verfahren nach Anspruch 6, dadurch gekennzeichnet, daß die Fremdstoffkonzentrationen 3,55 Gew.% Karbon, 2,33 Gew.% Silizium und 0,3 Gew.% Mangan sind.

9. Verfahren nach Anspruch 6, dadurch gekennzeichnet, daß der Karbonanteil nicht größer als 3,6 Gew.%, der Siliziumanteil nicht größer als 2,3 Gew.% und der Mangananteil 0,3 Gew.% ist.

10. Verfahren nach einem der Ansprüche 6 bis 9, dadurch gekennzeichnet, daß 95 Gew.% oder mehr an Eisen in hoch-magnetischer freier, ungebundener Form vorhanden ist.

**Revendications**

1. Dispositif d'unité à disque comportant un organe de manoeuvre de tête et un moteur de manoeuvre linéaire correspondant, dispositif caractérisé en ce que le moteur se compose d'un carter (31) et d'un collecteur de flux (35), tous les deux étant réalisés en ferrite ductile, dans laquelle la teneur en carbone ne dépasse pas 3,75% en poids, la teneur en silicium n'est pas supérieure à 2,8% en poids et la teneur en manganèse n'est pas supérieure à 0,52% en poids.

2. Dispositif selon la revendication 1, caractérisé en ce que les concentrations en impuretés sont définies par les plages pondérales suivantes: carbone 3,2—3,75% silicium, 2,1—2,8% et manganèse 0,28—0,52%.

3. Dispositif selon la revendication 1, caractérisé en ce que les concentrations pondérales en impuretés sont carbone 3,55%, silicium 2,33% et manganèse 0,3%.

4. Dispositif selon la revendication 1, caractérisé en ce que la teneur pondérale en carbone n'est pas supérieure à 3,6%, la teneur en silicium n'est pas supérieure à 2,3% et la teneur en manganèse est égale à 0,3%.

5. Dispositif selon l'une quelconque des revendications précédentes, caractérisé en ce qu'il y a au moins 95% en poids de fer à l'état non combiné, pratiquement sans aimantation.

6. Procédé de fabrication de pièces de transfert de flux magnétique pour un moteur linéaire commandant un organe de manoeuvre de tête dans une unité à disque, procédé caractérisé en ce qu'on réalise au moins le carter (31) et le collecteur de flux (35) du moteur en ferrite ductile dont la teneur pondérale en carbone n'est pas supérieure à 3,75%, la teneur pondérale en silicium non supérieure à 2,8% et la teneur pondérale en manganèse non supérieure à 0,52%.

7. Procédé selon la revendication 6, caractérisé en ce que les concentrations pondérales en impuretés sont définies par les plages suivantes: carbone 3,2—3,75%; silicium 2,1—2,8% et manganèse 0,28—0,52%.

8. Procédé selon la revendication 6, caractérisé en ce que les concentrations pondérales en impuretés sont les suivantes: carbone 3,55%; silicium 2,33% et manganèse 0,3%.

9. Procédé selon la revendication 6, caractérisé en ce que pour des pourcentages pondéraux, la teneur en carbone n'est pas supérieure à 3,6%, la teneur en silicium n'est pas supérieure à 2,3% et la teneur en manganèse n'est pas supérieure à 0,3%.

10. Procédé selon l'une quelconque des revendications 6 à 9, caractérisé en ce que l'on a au moins 95% en poids de fer sous une forme non combinée, pratiquement libre de toute aimantation.

# FIG.1.

DD

SERVICE PANEL

OPERATOR CONTROL PANEL

LOGIC GATE

POWER SUPPLY

VOICE COIL
MOTOR (VCM)

HEAD DISC
ASSEMBLY
(HDA)

DECKPLATE
ASSEMBLY

AIRFLOW AND
FILTRATION
SYSTEM

SIDE

FIG. 2.

9 DISCS

SPINDLE

ACTUATOR MECHANISM

FIG.3.